# EUROPÄISCHE PATENTSCHRIFT

(11) **EP 3 775 844 B1**
(45) Veröffentlichungstag und Bekanntmachung des Hinweises auf die Patenterteilung: **07.06.2023**
(21) Anmeldenummer: 19716095.5
(22) Anmeldetag: 27.03.2019
(51) Int. Cl.: G01N 21/03, G01N 21/05

(54) **OPTISCHE DURCHFLUSSMESSZELLE UND MESSVORRICHTUNG UMFASSEND DIE DURCHFLUSSMESSZELLE**
OPTICAL MEASUREMENT FLOW CELL AND MEASUREMENT DEVICE COMPRISING SAID FLOW CELL
CELLULE DE MESURE OPTIQUE À ÉCOULEMENT ET DISPOSITIF DE MESURE COMPRENANT LADITE CELLULE DE MESURE

(30) Priorität: 27.03.2018 DE 102018107323
(43) Veröffentlichungstag der Anmeldung: 17.02.2021
(73) Patentinhaber: Max-Planck-Gesellschaft zur Förderung der Wissenschaften E. V., 80539 München (DE); Otto-von-Guericke-Universität Magdeburg, 39106 Magdeburg (DE)
(72) Erfinder: SCHRÖDER, Torsten, 39443 Straßfurt OT Üllnitz (DE); DETLEF, Franz, 06217 Merseburg (DE); TEMMEL, Erik, 39108 Magdeburg (DE); HALTENHOF, Steve, 39106 Magdeburg (DE); WÜNSCH, Andreas, 70180 Stuttgart (DE); EBLING, René, 39356 Weferlingen (DE)
(74) Vertreter: Schlosser, Martin
(86) Internationale Anmeldenummer: PCT/EP2019/057665
(87) Internationale Veröffentlichungsnummer: WO 2019/185679

(56) Entgegenhaltungen:
- DE-A1- 2 246 225
- US-B2- 9 267 876

## Beschreibung

Die Erfindung betrifft eine Messzelle zum Untersuchen eines Fluidstroms.

Die Messzelle weist einen Grundkörper und einen durch den Grundkörper führenden Kanal für den Fluidstrom auf. In dem Grundkörper sind seitlich zum Kanal zumindest ein erstes Sichtfenster und ein zweites Sichtfenster ausgebildet, welche sich zumindest teilweise überlappen.

Die Erfindung betrifft des Weiteren eine Messvorrichtung mit einer solchen Messzelle sowie mit einer Auswerteeinrichtung.

Gattungsgemäße Messzellen werden verwendet, um Fluidströme zu untersuchen. Hierzu kann ein solcher Fluidstrom insbesondere durch den Kanal geleitet werden.

Ein typischer Anwendungsbereich ist dabei die Untersuchung von Kristallisationsprozessen. Beispielsweise kann eine kontinuierliche Messung einer Kristallgrößenverteilung erfolgen.

Im Rahmen einer Messvorrichtung kann eine Messzelle insbesondere zusammen mit einer Lichtquelle und einem Kameramodul sowie gegebenenfalls mit optischen Elementen wie Linsen verwendet werden, wobei die Lichtquelle einen Lichtstrahl durch die Sichtfenster der Messzelle erzeugt und dieser nach Durchgang durch die Sichtfenster von dem Kameramodul detektiert wird. Aus entsprechend gewonnenen Daten kann beispielsweise über Bildanalysealgorithmen eine Kristallgrößenverteilung extrahiert werden.

Es hat sich bei aus dem Stand der Technik bekannten Durchflussmesszellen gezeigt, dass diese für zahlreiche Messaufgaben nur bedingt geeignet sind, da sie im Fluidstrom Effekte wie beispielsweise ein Ausfallen von Kristallen oder Sedimentation hervorrufen, wodurch Messungen beeinträchtigt werden.

Das Dokument DE 2 246 225 offenbart eine Durchflussküvette für die Spektralanalyse, welche eine sich nach außen erweiternde Konizität eines Kanals zu einem Mittenbereich mit maximaler Abmessung zwischen einander gegenüberliegenden Sichtfenstern aufweist.

Es ist deshalb eine Aufgabe der Erfindung, eine im Vergleich zum Stand der Technik alternative, beispielsweise bessere Messzelle zum Untersuchen eines Fluidstroms bereitzustellen. Es ist des Weiteren eine Aufgabe der Erfindung, eine Messvorrichtung mit einer solchen Messzelle bereitzustellen.

Dies wird erfindungsgemäß durch eine Messzelle nach Anspruch 1 sowie eine Messvorrichtung nach Anspruch 14 erreicht. Vorteilhafte Ausgestaltungen der Messzelle können beispielsweise den Unteransprüchen entnommen werden.

Die Erfindung betrifft eine Messzelle zum Untersuchen eines Fluidstroms nach Anspruch 1.

Die Messzelle weist einen Grundkörper auf.

Die Messzelle weist einen durch den Grundkörper führenden Kanal für den Fluidstrom auf, wobei der Kanal zumindest einen Eingangsabschnitt, einen Messabschnitt und einen zwischen Eingangsabschnitt und Messabschnitt liegenden Diffusorabschnitt aufweist.

Unter einem Kanal kann insbesondere ein länglicher Hohlraum verstanden werden, welcher sich durch den Grundkörper erstreckt.

Der Eingangsabschnitt weist eine Einlassöffnung zum Einleiten des Fluidstroms in den Kanal auf.

Eine Querschnittsfläche des Kanals vergrößert sich im Diffusorabschnitt zum Messabschnitt hin.

In dem Grundkörper sind seitlich zum Messabschnitt des Kanals zumindest ein erstes Sichtfenster und ein zweites Sichtfenster ausgebildet, welche sich zumindest teilweise überlappen. Die Sichtfenster können dabei insbesondere durch transparente Elemente wie beispielsweise Glas oder Kunststoff realisiert sein. Durch die überlappende Anordnung kann insbesondere erreicht werden, dass ein Lichtstrahl gerade durch beide Sichtfenster und dazwischen durch den Kanal hindurchtreten kann, insbesondere um einen durch den Kanal fließenden Fluidstrom zu analysieren.

Die Sichtfenster können sich auch vollständig überlappen.

Erfindungsgemäß ist vorgesehen, dass ein Querschnitt des Kanals im Eingangsabschnitt, im Diffusorabschnitt und im Messabschnitt jeweils quer zu einer gemeinsamen Längsachse steht. Dadurch kann eine bestmöglich geradlinige Ausbreitung des Fluidstroms im Kanal erreicht werden, wodurch insbesondere eine Ausbildung von Toträumen und ein Ausfallen von unerwünschten Sedimenten verhindert werden.

Es sei verstanden, dass der Fluidstrom keinen Bestandteil der Messzelle darstellt, sondern die Messzelle vielmehr dazu ausgebildet ist, dass ein solcher Fluidstrom durch sie durchgeleitet wird.

Die Längsachse bildet bevorzugt eine Symmetrieachse des Kanals. Dadurch kann eine besonders vorteilhafte Strömung erreicht werden.

Die Längsachse ist insbesondere gerade ausgebildet.

Der Kanal hat bevorzugt im Eingangsabschnitt einen runden Querschnitt. Dadurch wird eine vorteilhafte Aufnahme des Fluidstroms in den Kanal erreicht, wobei eine gewünschte Form für den Messabschnitt erst nach dem Eingangsabschnitt eingestellt wird.

Der Kanal hat bevorzugt im Eingangsabschnitt einen Durchmesser von 3 mm bis 5 mm, oder besonders bevorzugt einen Durchmesser von 4 mm. Derartige Werte haben sich in der Praxis als vorteilhaft erwiesen, wobei erwähnt sei, dass auch andere Werte verwendet werden können.

Der Kanal weist erfindungsgemäß zwischen Eingangsabschnitt und Diffusorabschnitt einen Formänderungsabschnitt auf, in welchem sich ein Querschnitt des Kanals zum Diffusorabschnitt hin in eine Langlochform verändert. Bevorzugt steht ein Querschnitt des Kanals im Formänderungsabschnitt quer zur gemeinsamen Längsachse. Dadurch kann die Form des Kanals insbesondere fließend in eine Form geändert werden, welche im Diffusorabschnitt und/oder im Messabschnitt gewünscht wird. Bevorzugt ist eine Länge des Formänderungsabschnitts entlang der Längsachse kleiner als eine Länge des Diffusorabschnitts entlang der Längsachse. Besonders bevorzugt ist die Länge des Formänderungsabschnitts kleiner als die Hälfte oder ein Drittel der Länge des Diffusorabschnitts.

Bevorzugt bleibt im Diffusorabschnitt eine Tiefe des Kanals konstant. Bevorzugt weitet sich im Diffusorabschnitt eine Breite des Kanals auf. Dadurch kann ein vorteilhaftes Strömungsprofil erreicht werden, wobei insbesondere eine Strömung verlangsamt werden kann. Die Tiefe gibt dabei insbesondere eine Ausdehnung des Kanals senkrecht zu den Sichtfenstern und/oder zwischen den Sichtfenstern und/oder quer zu den Sichtfenstern an. Die Breite gibt insbesondere eine Ausdehnung des Kanals quer zur Tiefe und quer zur Längsachse an.

Bevorzugt weitet sich die Breite mit einem Winkel zwischen 50° und 56°, besonders bevorzugt 53°, auf. Dies kann insbesondere im Diffusorabschnitt erfolgen, wobei der Diffusorabschnitt bevorzugt für eine gleichmäßige Aufweitung sorgen kann. Ein solcher Winkel zwischen 50° und 56° kann insbesondere zwischen Diffusorseitenachsen bzw. Außenkanten des Diffusorabschnitts eingenommen werden.

Von der Längsachse zu jeweiligen Außenkanten bzw. Diffusorseitenachsen des Diffusorabschnitts kann beispielsweise ein Winkel von 27° eingenommen werden.

Gemäß einer bevorzugten Ausführung weist der Kanal ferner einen gegenüberliegend zum Diffusorabschnitt an den Messabschnitt angrenzenden Verkleinerungsabschnitt sowie weiter bevorzugt einen gegenüberliegend zum Messabschnitt an den Verkleinerungsabschnitt angrenzenden Auslassabschnitt auf. Ein Querschnitt des Kanals im Auslassabschnitt ist dabei bevorzugt kleiner als im Messabschnitt und verkleinert sich bevorzugt im Verkleinerungsabschnitt vom Messabschnitt zum Auslassabschnitt. Dadurch kann das Strömungsprofil für den Austritt des Fluids aus dem Kanal wieder verändert werden.

Bevorzugt weist der Auslassabschnitt eine Auslassöffnung zum Ausleiten des Fluidstroms aus dem Kanal auf. Ein Querschnitt des Kanals steht im Verkleinerungsabschnitt und/oder im Auslassabschnitt bevorzugt jeweils quer zur gemeinsamen Längsachse.

Der Kanal weist bevorzugt zwischen Verkleinerungsabschnitt und Auslassabschnitt einen weiteren Formänderungsabschnitt auf, in welchem sich ein Querschnitt des Kanals zum Verkleinerungsabschnitt hin vorzugsweise in eine Langlochform verändert. Ein Querschnitt des Kanals steht bevorzugt im weiteren Formänderungsabschnitt quer zur gemeinsamen Längsachse. Dadurch wird der Strömungsfluss in vorteilhafter Weise beibehalten. In dem weiteren Formänderungsabschnitt kann sich insbesondere der Querschnitt zum Auslassabschnitt hin wieder in eine Kreisform ändern. Bevorzugt ist eine Länge des weiteren Formänderungsabschnitts entlang der Längsachse kleiner als eine Länge des Verkleinerungsabschnitts entlang der Längsachse. Besonders bevorzugt ist die Länge des weiteren Formänderungsabschnitts kleiner als die Hälfte oder ein Drittel der Länge des Verkleinerungsabschnitts.

Der Verkleinerungsabschnitt ist bevorzugt spiegelverkehrt zum Diffusorabschnitt ausgebildet. Der weitere Formänderungsabschnitt ist bevorzugt spiegelverkehrt zum Formänderungsabschnitt ausgebildet. Der Auslassabschnitt ist bevorzugt spiegelverkehrt zum Eingangsabschnitt ausgebildet. Derartige Ausführungen haben sich als vorteilhaft erwiesen, da sie ein Strömungsprofil ergeben, welches unerwünschte Effekte wie Toträume und Ausfallprozesse vermeidet. Die spiegelverkehrte Ausbildung kann sich dabei auf eine Ebene beziehen, welche quer zur Längsachse steht.

Bevorzugt hat die Langlochform am Übergang zwischen Formänderungsabschnitt und Diffusorabschnitt und/oder am Übergang zwischen Verkleinerungsabschnitt und weiterem Formänderungsabschnitt eine Breite von 3,5 mm bis 4,5 mm, oder besonders bevorzugt eine Breite von 4 mm.

Bevorzugt hat die Langlochform am Übergang zwischen Formänderungsabschnitt und Diffusorabschnitt und/oder am Übergang zwischen Verkleinerungsabschnitt und weiterem Formänderungsabschnitt einen seitlichen Radius von 0,8 mm bis 1,2 mm, oder besonders bevorzugt einen seitlichen Radius von 1 mm.

Bevorzugt weist der Messabschnitt zwischen den Sichtfenstern eine Tiefe von mehr als 2 mm oder mehr als 3 mm oder mehr als 3,5 mm auf.

Bevorzugt weist der Messabschnitt zwischen den Sichtfenstern eine Tiefe von weniger als 3 mm oder weniger als 3,5 mm oder weniger als 4 mm auf.

Bevorzugt weist der Messabschnitt zwischen den Sichtfenstern eine Tiefe von 1,6 mm bis 2,4 mm, oder besonders bevorzugt eine Tiefe von 2 mm, auf.

Bevorzugt weist der Messabschnitt eine Breite von 12 mm bis 16 mm, oder besonders bevorzugt eine Breite von 14 mm, auf.

Bei den erwähnten Werten wurden in der Praxis besonders vorteilhafte Resultate erzielt, insbesondere in Bezug auf die Ausbildung eines geeigneten Strömungsprofils für eine unverfälschte Messung.

Der Querschnitt des Kanals weist bevorzugt im Messabschnitt eine konstante Langlochform auf. Dies ermöglicht die Ausbildung eines gleichmäßigen Strömungsprofils. Diese Langlochform kann insbesondere einen seitlichen Radius von 0,8 mm bis 1,2 mm, bevorzugt 1 mm, aufweisen.

Es sei verstanden, dass anstelle einer Langlochform im Messabschnitt beispielsweise auch eine rechteckige Form oder eine runde Form als Querschnitt verwendet werden kann.

Die Messzelle ist bevorzugt aus Werkstoffen ausgebildet, welche in einem pH-Wert-Bereich zwischen 5 und 8 oder in einem pH-Wert-Bereich zwischen 1 und 8 chemisch inert sind. Dadurch kann eine Beschädigung der Messzelle bei typischerweise auftretenden pH-Werten von Fluiden oder auch Reinigungsmitteln vermieden werden.

Die Erfindung betrifft des Weiteren eine Messvorrichtung nach Anspruch 14. Die Messvorrichtung weist eine Messzelle gemäß der Erfindung auf, wobei auf alle beschriebenen Ausführungen und Varianten zurückgegriffen werden kann. Die Messvorrichtung weist eine Auswerteeinrichtung auf, welche dazu konfiguriert ist, mittels eines durch die Sichtfenster geleiteten Lichtstrahls ein durch den Kanal fließendes Fluid, Suspensionen und/oder Partikel bzw. im Fluid enthaltene Suspensionen und/oder Partikel auszuwerten. Suspensionen und/oder Partikel können insbesondere in dem Fluid enthalten sein. Mittels der erfindungsgemäßen Messvorrichtung können die bereits mit Bezug auf die Messzelle beschriebenen Vorteile erreicht werden.

Gemäß einer Weiterbildung ist vorgesehen, dass die Messzelle eine Temperiervorrichtung aufweist, mittels welcher eine Temperatur des Kanals beeinflussbar ist. Dadurch wird erreicht, dass die Temperatur des Kanals und damit auch eines durch den Kanal strömenden Fluidstroms auf einen Wert eingestellt werden kann, welcher beispielsweise verhindert oder unterdrückt, dass in dem Fluidstrom enthaltene Partikel oder sonstige Elemente aufgrund einer zu niedrigen Temperatur ausfallen und dadurch eine Messung verfälschen.

Die Temperiervorrichtung kann insbesondere in dem Grundkörper angeordnet sein.

Die Ausgestaltung mit Temperiervorrichtung beruht insbesondere auf der Erkenntnis, dass gattungsgemäße Messzellen typischerweise Kältebrücken von der Umgebung bis in den Kanal bilden, welche zu einer ausreichend niedrigen Temperatur für ein Ausfallen von Partikeln führen. Es sei jedoch erwähnt, dass die Ausführung nicht darauf eingeschränkt ist, bewusst eine hohe Temperatur einzustellen, sondern in speziellen Anwendungen auch eine bewusst niedrige Temperatur oder allgemein eine definierte und damit auch reproduzierbare Temperatur eingestellt werden kann.

Insbesondere kann mittels der Temperiervorrichtung eine Temperatur des durch den Kanal fließenden Fluidstroms beeinflussbar sein. Dadurch können, wie bereits erwähnt, unerwünschte Prozesse im Fluidstrom verhindert werden.

Der Grundkörper kann vorteilhaft aus Metall ausgebildet sein. Es können jedoch auch andere genügend stabile Materialien verwendet werden, beispielsweise Kunststoffe. Es können auch unterschiedliche Materialien kombiniert werden.

Die Temperiervorrichtung kann einen weiteren Kanal aufweisen, welcher in dem Grundkörper separat zum Kanal zur Durchleitung von temperierendem Fluid ausgebildet ist. Dies ermöglicht es, temperierendes Fluid durch den Grundkörper bzw. den weiteren Kanal zu leiten und damit für einen Wärmeaustausch zwischen dem temperierenden Fluid und dem Grundkörper zu sorgen, so dass eine Temperatur eingestellt werden kann.

Die Temperiervorrichtung weist gemäß einer bevorzugten Ausführung einen Hohlraum auf, welcher in dem Grundkörper separat zum Kanal zur Durchleitung von temperierendem Fluid ausgebildet ist. Bei einem solchen Hohlraum kann es sich insbesondere um einen Hohlraum handeln, welcher ganz oder teilweise den Kanal umgibt. Durch einen Wärmeaustausch zwischen dem temperierenden Fluid und dem Grundkörper kann eine Temperatur des Grundkörpers in vorteilhafter Weise beeinflusst bzw. eingestellt werden.

Der Hohlraum kann insbesondere zwischen einer ersten außenseitigen Platte und einer zweiten außenseitigen Platte ausgebildet sein. Bevorzugt ist dabei zumindest eine der Platten abnehmbar. Es können auch beide Platten abnehmbar sein. Dies ermöglicht eine Zugänglichkeit des Hohlraums für Revisionszwecke oder andere Aufgaben.

Der Hohlraum kann insbesondere den Kanal umgeben. Dadurch kann eine besonders gute Einstellbarkeit der Temperatur erreicht werden.

Die Temperiervorrichtung weist bevorzugt eine Bereitstellungseinrichtung für temperierendes Fluid auf oder ist mit einer Bereitstellungseinrichtung für temperierendes Fluid verbunden. Bei einem solchen temperierenden Fluid kann es sich insbesondere um Wasser oder auch um ein Gas handeln. Auch andere Fluide wie beispielsweise Mischungen aus Flüssigkeiten, welchen beispielsweise Zusätze zur Verhinderung von Korrosion oder zur Beständigkeit gegenüber Frost zugesetzt werden können, sind jedoch ebenso verwendbar. Die Bereitstellungseinrichtung ist dabei insbesondere vorzugsweise dazu ausgebildet, das temperierende Fluid vor dessen Bereitstellung zu der Messzelle auf eine definierte Temperatur zu bringen, beispielsweise zu erwärmen. Hierzu kann die Temperiervorrichtung beispielsweise Heizelemente aufweisen oder auch einen Wärmetauscher zur Verbindung mit einer externen Wärmequelle und/oder Wärmesenke aufweisen.

Die Temperiervorrichtung kann gemäß einer Ausführung einen elektrischen Heizdraht aufweisen. Gemäß einer weiteren Ausführung kann sie eine Infrarotheizung aufweisen. Gemäß noch einer weiteren Ausführung kann die Temperiervorrichtung eine Induktionsheizung aufweisen. Durch derartige Elemente, also insbesondere einen elektrischen Heizdraht, eine Infrarotheizung oder eine Induktionsheizung, kann unmittelbar an der Messzelle bzw. im Grundkörper eine Erhöhung der Temperatur erreicht werden. Es sei verstanden, dass derartige Ausführungen beliebig untereinander kombiniert werden können und auch mit der Verwendung eines weiteren Kanals oder eines Hohlraums für temperierendes Fluid kombiniert werden können.

Bevorzugt ist die Temperiervorrichtung dazu ausgebildet, eine Erhöhung und/oder Verringerung einer Temperatur des Grundkörpers und/oder des Kanals von mindestens 15 K pro Stunde zu bewirken. Eine derartige Temperaturrampe hat sich in der Praxis für typische Anwendungen als vorteilhaft erwiesen.

Gemäß einer bevorzugten Ausführung weist die Temperiervorrichtung eine Temperaturüberwachungsvorrichtung zum Abfühlen oder zur Regelung einer Temperatur von Komponenten der Messzelle auf. Damit kann während des Betriebs der Temperiervorrichtung die eingestellte bzw. erreichte Temperatur überwacht werden und es kann durch eine Regelung, beispielsweise durch einen PID-Regler, dafür gesorgt werden, dass auch bei veränderten Umgebungsbedingungen oder sonstigen Einflüssen die gewünschte Temperatur möglichst zügig erreicht bzw. korrekt eingestellt und aufrechterhalten wird.

Bei der erfindungsgemäßen Messvorrichtung kann die Messzelle insbesondere so ausgebildet sein, dass sie einen weiteren Kanal oder einen Hohlraum für temperierendes Fluid aufweist, wobei die Messvorrichtung in diesem Fall ferner bevorzugt eine Bereitstellungseinrichtung für temperierendes Fluid aufweist. Damit kann die bereits weiter oben beschriebene Funktionalität einer Temperatureinstellung mittels temperierendem Fluid in vorteilhafter Weise realisiert werden.

Weitere Merkmale und Vorteile wird der Fachmann den nachfolgend mit Bezug auf die beigefügte Zeichnung beschriebenen Ausführungsbeispielen entnehmen. Dabei zeigen:
- Fig. 1:: eine Messvorrichtung in schematischer Ansicht,
- Fig. 2:: eine Messzelle gemäß einem Ausführungsbeispiel in einer perspektivischen Schnittansicht,
- Fig. 3:: eine erste außenseitige Platte,
- Fig. 4:: ein erstes Hauptelement,
- Fig. 5:: ein zweites Hauptelement,
- Fig. 6:: eine zweite außenseitige Platte,
- Fig. 7:: eine Querschnittsansicht einer Langlochform,
- Fig. 8:: eine schematische Ansicht einer Messzelle gemäß einem weiteren Ausführungsbeispiel,
- Fig. 9:: eine schematische Ansicht einer Messzelle gemäß noch einem weiteren Ausführungsbeispiel,
- Fig. 10:: eine schematische Ansicht einer Messzelle gemäß noch einem weiteren Ausführungsbeispiel, und
- Fig. 11:: eine schematische Ansicht einer Messzelle gemäß noch einem weiteren Ausführungsbeispiel.

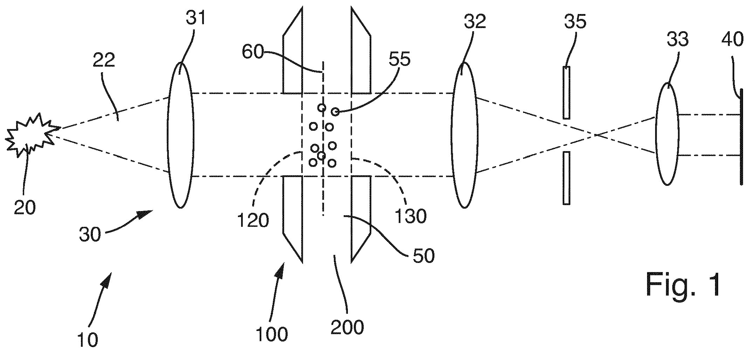

Fig. 1 zeigt rein schematisch eine Messvorrichtung 10 gemäß einem Ausführungsbeispiel der Erfindung.

Die Messvorrichtung 10 weist eine Lichtquelle 20 auf, welche einen Lichtstrahl 22 emittiert. Der Lichtstrahl 22 wird durch ein optisches System 30 geführt, welches eine erste Linse 31, eine zweite Linse 32 und eine dritte Linse 33 aufweist.

Die erste Linse 31 führt den Lichtstrahl 22 in einen parallelen Strahl über. Die zweite Linse 32 fokussiert den Lichtstrahl 22 durch eine Blende 35, nach welcher der Lichtstrahl 22 durch die dritte Linse 33 wieder in einen parallelen Strahl übergeführt wird.

Die Messvorrichtung 10 weist des Weiteren eine Auswerteeinrichtung 40 auf, auf welche der durch die dritte Linse 33 parallelisierte Lichtstrahl 22 trifft. Die Auswerteeinrichtung 40 ist hier lediglich schematisch dargestellt. Sie ist typischerweise als Detektor ausgebildet, welcher aus dem Lichtstrahl 22 Informationen, beispielsweise durch Bildverarbeitung oder Bilderkennung, erhalten kann.

Zwischen der ersten Linse 31 und der zweiten Linse 32 ist eine Messzelle 100 angeordnet. Es kann sich dabei insbesondere um eine Messzelle 100 wie hierin beschrieben bzw. wie mit Bezug auf die weiteren Figuren beschrieben und in diesen Figuren dargestellt handeln.

In Fig. 1 ist die Messzelle 100 jedoch lediglich schematisch dargestellt.

In der Messzelle 100 sind ein erstes Sichtfenster 120 und ein zweites Sichtfenster 130 ausgebildet. Diese überlappen sich. Der Lichtstrahl 22 tritt in einer parallelen Strahlführung durch das erste Sichtfenster 120 ein und verlässt die Messzelle 100 durch das zweite Sichtfenster 130.

Durch die Messzelle 100 führt ein Kanal 200. Durch diesen Kanal 200 kann ein Fluid bzw. ein Fluidstrom 50 geführt werden, wobei dieser Fluidstrom 50 Partikel 55 enthalten kann, welche mittels der Messvorrichtung 10 detektiert werden sollen. Es kann sich dabei beispielsweise um Kristalle handeln, welche bei diversen Kristallisationsprozessen entstehen können.

In der Messzelle 100 wird somit eine Objektebene 60 definiert, in welcher bzw. um welche herum eine Messung der Partikel 55 im Fluidstrom 50 erfolgen kann. Die Objektebene 60 entspricht vorliegend der weiter unten erwähnten Längsachse.

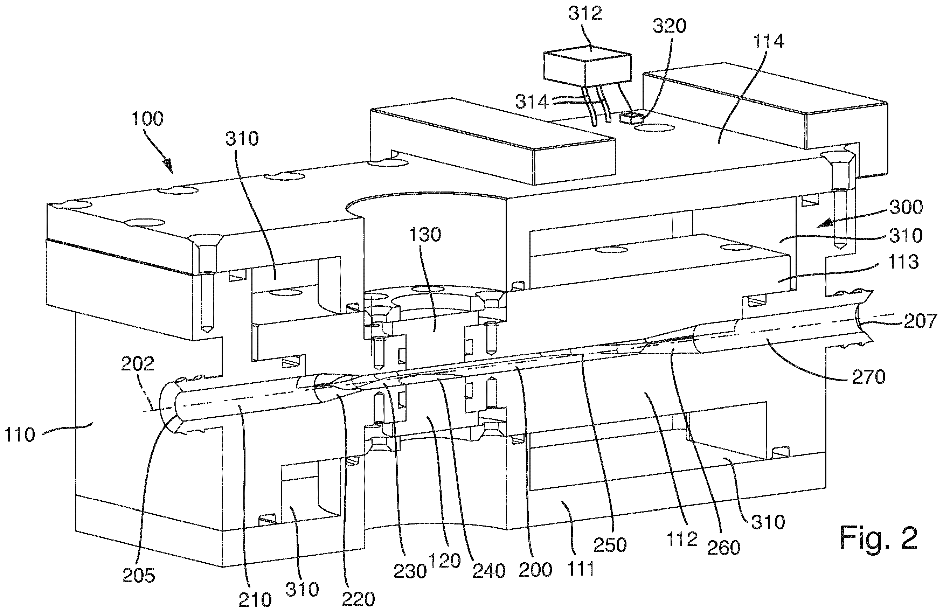

Fig. 2 zeigt eine Messzelle 100 gemäß einem Ausführungsbeispiel der Erfindung.

Die Messzelle 100 weist einen Grundkörper 110 auf, durch welchen sich ein Kanal 200 erstreckt.

Der Grundkörper 110 ist aufgeteilt in eine erste außenseitige Platte 111, ein erstes Hauptelement 112, ein zweites Hauptelement 113 sowie eine zweite außenseitige Platte 114.

Das erste Hauptelement 112 und das zweite Hauptelement 113 sind dabei zwischen den beiden außenseitigen Platten 111, 114 angeordnet. Die erwähnten Komponenten 111, 112, 113, 114 sind miteinander verschraubt und gegeneinander abgedichtet.

Dabei ist das zweite Hauptelement 113 unmittelbar mit dem ersten Hauptelement 112 verschraubt, wobei der Kanal 200 durch entsprechende Ausnehmungen in diesen beiden Hauptelementen 112, 113 ausgebildet ist. Hierauf wird weiter unten noch näher eingegangen werden.

Die außenseitigen Platten 111, 114 sind unmittelbar mit dem ersten Hauptelement 112 verschraubt.

Der Kanal 200 erstreckt sich entlang einer Längsachse 202. Die Längsachse 202 ist dabei so definiert, dass ein Querschnitt des Kanals 200 jeweils quer zur Längsachse 202 steht. Dies gilt für alle dargestellten Bereiche des Kanals 200.

Die Längsachse 202 bildet des Weiteren an jeder Stelle des Kanals 200 eine Symmetrieachse des Kanals 200. Anders ausgedrückt ist der Querschnitt des Kanals 200 nicht nur an jeder Stelle quer zur Längsachse 202, sondern auch symmetrisch bezüglich dieser Längsachse 202.

Der Kanal 200 weist zunächst eine Einlassöffnung 205 auf, durch welche Fluid einströmen kann. Dadurch kann der bereits mit Bezug auf Fig. 1 erwähnte Fluidstrom in dem Kanal 200 ausgebildet werden.

Unmittelbar angrenzend an die Einlassöffnung 205 weist der Kanal 200 einen Eingangsabschnitt 210 auf. In dem Eingangsabschnitt 210 hat der Kanal 200 einen runden Querschnitt.

Weitere Abschnitte des Kanals 200 werden nun nachfolgend beschrieben, wobei mit Bezug auf Fig. 2 ausgehend von dem Eingangsabschnitt 210 nach rechts vorgegangen wird.

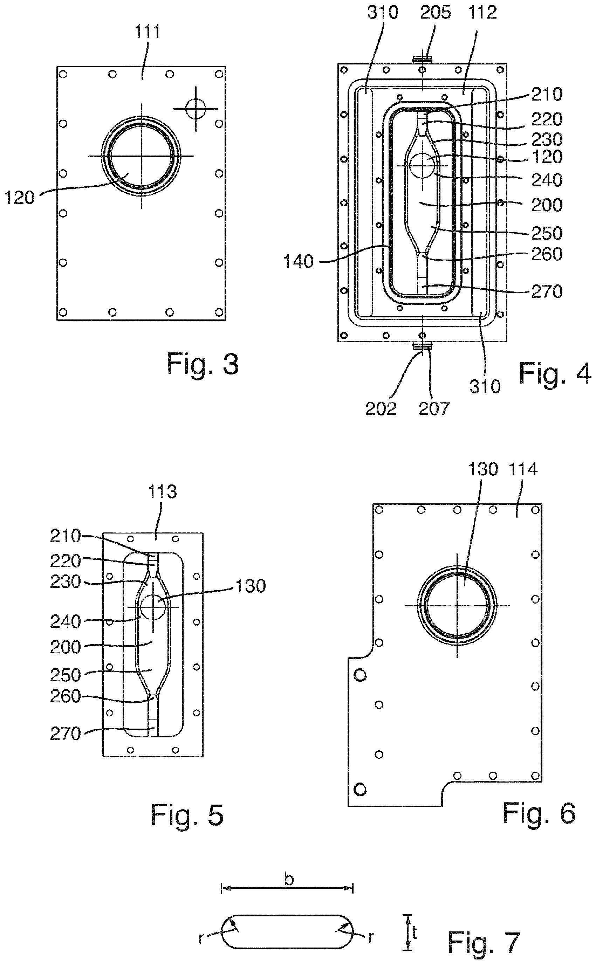

Angrenzend an den Eingangsabschnitt 210 ist ein Formänderungsabschnitt 220 angeordnet. In dem Formänderungsabschnitt 220 ändert sich der Querschnitt des Kanals 200 von einer Kreisform zu einer Langlochform. Eine solche Langlochform ist beispielhaft in Fig. 7 dargestellt und wird weiter unten beschrieben werden.

Angrenzend an den Formänderungsabschnitt 220 ist ein Diffusorabschnitt 230 ausgebildet. In dem Diffusorabschnitt 230 bleibt der Querschnitt des Kanals 200 in einer Langlochform, vergrößert jedoch seine Querschnittsfläche. Dies wird insbesondere dadurch erreicht, dass sich eine Breite quer zur Schnittebene der Darstellung von Fig. 2 kontinuierlich vergrößert. Diese Vergrößerung geschieht dabei mit einem Diffusorwinkel, welcher vorliegend einen Wert von 27° relativ zur Längsachse 202 hat. Es sei jedoch verstanden, dass auch andere Winkel verwendet werden können.

In dem Diffusorabschnitt 230 verringert sich eine Strömungsgeschwindigkeit des durch den Kanal 200 fließenden Fluids und eventuell enthaltene Partikel verteilen sich über einen größeren Querschnitt. Dies erleichtert die Messung und verhindert im Übrigen wirkungsvoll ein Ausfallen oder ein Anlagern von Partikeln oder anderen unerwünschten Substanzen.

Anschließend an den Diffusorabschnitt 230 ist ein Messabschnitt 240 ausgebildet. Seitlich zum Messabschnitt 240 sind ein erstes Sichtfenster 120 und ein zweites Sichtfenster 130 angeordnet. Diese sind in dem ersten Hauptelement 112 bzw. dem zweiten Hauptelement 113 wie gezeigt als durchsichtige Elemente ausgebildet. Hierfür kann insbesondere durchsichtiges Glas oder durchsichtiger Kunststoff verwendet werden. Durch die Sichtfenster 120, 130 kann der in Fig. 1 dargestellte Lichtstrahl 22 eintreten und austreten. Hierzu überlappen die beiden Sichtfenster 120, 130, so dass ein Durchtritt des Lichtstrahls 22 durch die beiden Sichtfenster 120, 130 sowie durch den Kanal 200 an seinem Messabschnitt 240 möglich ist.

Der Kanal 200 erstreckt sich dann weiter bis zu einem Verkleinerungsabschnitt 250. Der Verkleinerungsabschnitt 250 ist bezüglich einer nicht dargestellten Ebene spiegelverkehrt zum Diffusorabschnitt 230 ausgebildet. In dem Verkleinerungsabschnitt 250 verkleinert sich der Querschnitt des Kanals 200, wobei er in diesem Verkleinerungsabschnitt 250 eine Langlochform behält. Hierzu verringert sich insbesondere die Breite der Langlochform quer zur Schnittebene der Darstellung von Fig. 2.

Angrenzend an den Verkleinerungsabschnitt 250 weist der Kanal 200 einen weiteren Formänderungsabschnitt 260 auf. In diesem ändert sich die Form des Querschnitts des Kanals 200 wiederum von einer Langlochform zu einer Kreisform.

Angrenzend an den weiteren Formänderungsabschnitt 260 ist ein Auslassabschnitt 270 angeordnet, in welchem der Kanal 200 einen runden Querschnitt aufweist. Der Auslassabschnitt 270 endet in eine Auslassöffnung 207, durch welche das Fluid den Kanal 200 wieder verlassen kann.

Umgebend um den Kanal 200 ist vorliegend eine Temperiervorrichtung 300 ausgebildet. Die Temperiervorrichtung 300 dient dazu, die Temperatur des Kanals 200 einzustellen.

Die Temperiervorrichtung 300 weist vorliegend einen Hohlraum 310 auf, welcher sowohl zwischen dem zweiten Hauptelement 113 und der zweiten außenseitigen Platte 114 wie auch zwischen dem ersten Hauptelement 112 und der ersten außenseitigen Platte 111 ausgebildet ist. Des Weiteren ist der Hohlraum 310 auch seitlich zum Kanal 200 ausgebildet, so dass er die dargestellten Bereiche verbindet. Somit wird der Kanal 200 von dem Hohlraum 310 nahezu vollständig umgeben.

Die Temperiervorrichtung 300 weist des Weiteren eine Bereitstellungseinrichtung 312 für temperierendes Fluid auf. Die Bereitstellungseinrichtung 312 ist über Leitungen 314 mit dem Hohlraum 310 verbunden. Dadurch kann temperierendes Fluid, insbesondere Wasser, auf eine bestimmte Temperatur gebracht werden und dann in den Hohlraum 310 geleitet und aus diesem auch wieder abgeleitet werden.

Es sei verstanden, dass die Temperiervorrichtung 312 sowie die Leitungen 314 hier rein schematisch dargestellt sind. Die Temperiervorrichtung 312 kann insbesondere ein Heizelement aufweisen, um das temperierende Fluid zu erwärmen.

Die Temperiervorrichtung 300 weist des Weiteren eine Temperaturüberwachungsvorrichtung 320 in Form eines Temperatursensors auf. Dieser Temperatursensor ist an dem Grundkörper 110 angebracht und überwacht dessen Temperatur. Dadurch kann eine Regelung der Temperatur des Grundkörpers 110 und damit auch des Kanals 200 realisiert werden.

Da die Elemente des Grundkörpers 110 ganz oder zumindest im Wesentlichen aus Metall ausgebildet sind, weist der Grundkörper 110 insgesamt eine hohe Wärmeleitfähigkeit auf. Somit kann von einer guten Wärmeübertragung und einer gleichmäßigen Temperierung ausgegangen werden.

Die beiden außenseitigen Platten 111, 114 sind, wie bereits erwähnt, verschraubt. Dies bedeutet insbesondere, dass sie abnehmbar sind, so dass der Hohlraum 310 zugänglich ist, beispielsweise für Revisionszwecke.

Fig. 3 zeigt die erste außenseitige Platte 111 separat in einer Draufsicht. Dabei ist der Bereich zu erkennen, in welchem das erste Sichtfenster 120 ausgebildet wird.

Fig. 4 zeigt das erste Hauptelement 112 separat in einer Draufsicht, wobei das zweite Hauptelement 113 abgenommen ist. Dadurch ist die Ausnehmung zu sehen, welche den Kanal 200 bildet. Die bereits mit Bezug auf Fig. 2 erläuterten Abschnitte 210, 220, 230, 240, 250, 260, 270 sind deutlich zu erkennen. Des Weiteren ist das erste Sichtfenster 120 zu erkennen.

Fig. 4 zeigt ebenfalls, dass seitlich zum Kanal 200 der Hohlraum 310 ausgebildet ist, so dass der Hohlraum 310 den Kanal 200 praktisch vollständig umgibt.

Das erste Hauptelement 112 weist des Weiteren eine umlaufende Dichtung 140 auf, welche vorliegend in Form einer Gummidichtung ausgeführt ist. Das zweite Hauptelement 113 kann auf das erste Hauptelement 112 so aufgesetzt werden, dass die beiden Elemente 112, 113 miteinander verschraubt werden können und entlang der Dichtung 140 der Kanal 200 allseitig abgedichtet ist.

Bezüglich der weiteren Details sei bei Fig. 4 und auch bei den anderen Figuren auf die obige ausführliche Beschreibung von Fig. 2 verwiesen.

Fig. 5 zeigt das zweite Hauptelement 113 separat in einer Draufsicht. Dabei ist ebenfalls der Kanal 200 mit seinen bereits erläuterten Abschnitten 210, 220, 230, 240, 250, 260, 270 zu erkennen. Des Weiteren ist das zweite Sichtfenster 130 zu erkennen. Wie bereits erwähnt, wird das zweite Hauptelement 113 auf das erste Hauptelement 112 aufgesetzt und mit diesem verschraubt. Dadurch wird der Kanal 200 in seiner endgültigen, abgedichteten Form ausgebildet.

Fig. 6 zeigt die zweite außenseitige Platte 114 separat in einer Draufsicht. Dabei ist das zweite Sichtfenster 130 zu erkennen.

Es sei verstanden, dass in den Fig. 3 bis 6 jeweilige Kreise von gleichem Durchmesser eingezeichnet sind, welche Löcher darstellen, durch welche eine Verschraubung der Komponenten 111, 112, 113, 114 miteinander erfolgen kann. Da die Funktionalität dieser Löcher offensichtlich ist, wird auf eine separate Bezeichnung mit Bezugszeichen im Sinne einer besseren Lesbarkeit verzichtet. Die Löcher sind im Übrigen auch in Fig. 2 zu sehen.

Fig. 7 zeigt eine Langlochform, wie sie insbesondere in dem Messabschnitt 240, in dem Diffusorabschnitt 230 und in dem Verkleinerungsabschnitt 250 des Kanals 200 auftritt. Dabei ist die Breite b eingezeichnet, welche sich in dem Diffusorabschnitt 230 vergrößert und in dem Verkleinerungsabschnitt 250 verkleinert.

Wie gezeigt ist eine Langlochform grundsätzlich dadurch charakterisiert, dass sich zwischen zwei seitlichen Halbkreisen mit identischem Radius r ein Abschnitt konstanter Tiefe befindet, welcher unmittelbar und/oder sprungfrei an die Halbkreise anschließt.

Des Weiteren ist auch eine Tiefe t eingezeichnet, welche im Diffusorabschnitt 230, im Messabschnitt 240 und im Verkleinerungsabschnitt 250 konstant bleibt.

Außerdem sind die seitlichen Radien r zu sehen, welche die Rundung an den Seiten definieren.

In dem hier dargestellten Ausführungsbeispiel hat die Langlochform im Messabschnitt 240 vorliegend eine Breite b von 14 mm, einen seitlichen Radius r von 1 mm sowie eine Tiefe t von 2 mm. Im Eingangsabschnitt 210 und im Auslassabschnitt 270 hat der Kanal 200 in diesem Ausführungsbeispiel einen Durchmesser von 4 mm. Am Übergang zwischen Formänderungsabschnitt 220 und Diffusorabschnitt 230 sowie am Übergang zwischen Verkleinerungsabschnitt 250 und weiterem Formänderungsabschnitt 260 hat der Kanal 200 in diesem Ausführungsbeispiel eine Breite b von 4 mm. Derartige Werte haben sich für typische Anwendungsfälle als besonders vorteilhaft herausgestellt. Jedoch sei erwähnt, dass diese Werte lediglich beispielhaft genannt sind und auch andere Ausführungen möglich sind.

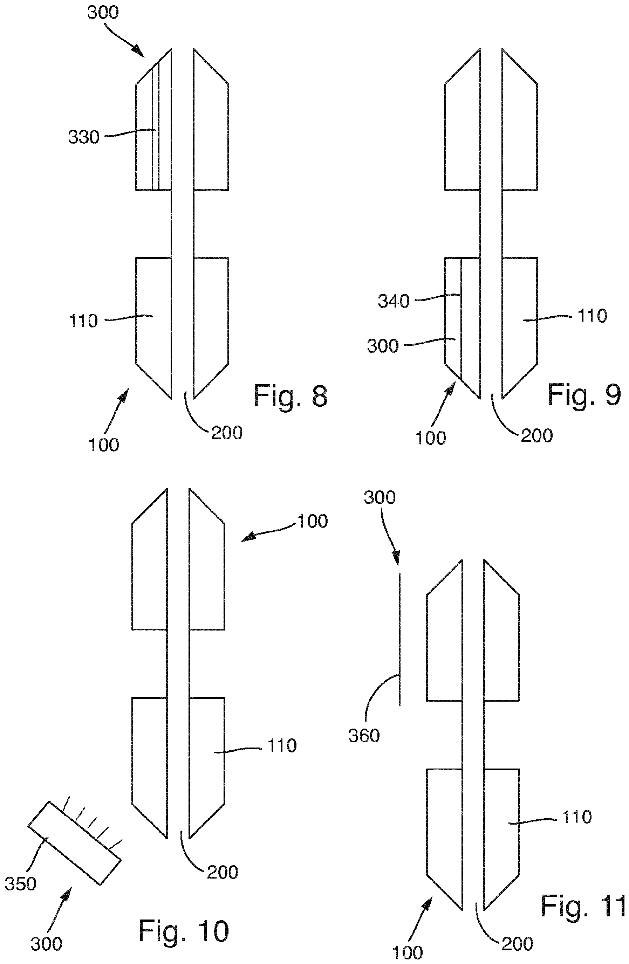

Fig. 8 zeigt rein schematisch eine Messzelle 100 gemäß einem weiteren Ausführungsbeispiel. In Abwandlung zum Ausführungsbeispiel der Fig. 2 bis 6 ist dabei die Temperiervorrichtung 300 in Form eines weiteren Kanals 330 ausgeführt, welcher in dem Grundkörper 110 neben dem Kanal 200 ausgebildet ist. Durch diesen weiteren Kanal 330 kann temperierendes Fluid geleitet werden, um in ähnlicher Weise wie mittels des Hohlraums 310 eine Temperatur einzustellen.

Fig. 9 zeigt rein schematisch eine Messzelle 100 gemäß einem noch weiteren Ausführungsbeispiel. Dabei ist die Temperiervorrichtung 300 in Form eines Heizdrahts 340 ausgeführt, durch welchen elektrischer Strom zum Heizen des Grundkörpers 110 bzw. des Kanals 200 geleitet werden kann.

Fig. 10 zeigt rein schematisch eine Messzelle 100 gemäß noch einem weiteren Ausführungsbeispiel. Dabei ist die Temperiervorrichtung 300 als Infrarotheizung 350 ausgeführt, welche in Form eines Infrarotstrahlers ausgebildet ist, der Infrarotstrahlung auf den Grundkörper 110 emittiert.

Fig. 11 zeigt rein schematisch eine Messzelle 100 gemäß noch einem weiteren Ausführungsbeispiel. Die Temperiervorrichtung 300 ist dabei als neben dem Grundkörper 110 angeordnete Induktionsheizung 360 ausgebildet, welche mit einem Wechselstrom beaufschlagt werden kann, so dass über ein elektromagnetisches Wechselfeld eine Erwärmung des Grundkörpers 110 erfolgt.

Es sei nochmals darauf hingewiesen, dass die Darstellungen der Fig. 8 bis 11 rein schematisch zu verstehen sind, um unterschiedliche Ausführungen der Temperiervorrichtung 300 zu zeigen. Es sei verstanden, dass die Ausführungen der Temperiervorrichtung 300, welche in den Fig. 2 bis 11 gezeigt sind, auch beliebig miteinander kombiniert werden können.

## Patentansprüche

1. Messzelle (100) zum Untersuchen eines Fluidstroms (50),
wobei die Messzelle (100) folgendes aufweist:
- einen Grundkörper (110),
- einen durch den Grundkörper (110) führenden Kanal (200) für den Fluidstrom (50),
- wobei der Kanal (200) zumindest einen Eingangsabschnitt (210), einen Messabschnitt (240) und einen zwischen Eingangsabschnitt (210) und Messabschnitt (240) liegenden Diffusorabschnitt (230) aufweist,
- wobei der Eingangsabschnitt (210) eine Einlassöffnung (205) zum Einleiten des Fluidstroms (50) in den Kanal (200) aufweist,
- wobei sich eine Querschnittsfläche des Kanals (200) im Diffusorabschnitt (230) zum Messabschnitt (240) hin vergrößert,
- wobei in dem Grundkörper (110) seitlich zum Messabschnitt (240) des Kanals (200) zumindest ein erstes Sichtfenster (120) und ein zweites Sichtfenster (130) ausgebildet sind, welche sich zumindest teilweise überlappen,
- wobei ein Querschnitt des Kanals (200) im Eingangsabschnitt (210), im Diffusorabschnitt (230) und im Messabschnitt (240) jeweils quer zu einer gemeinsamen Längsachse (202) steht,
- **dadurch gekennzeichnet, dass** der Kanal (200) zwischen Eingangsabschnitt (210) und Diffusorabschnitt (230) einen Formänderungsabschnitt (220) aufweist, in welchem sich ein Querschnitt des Kanals (200) zum Diffusorabschnitt (230) hin in eine Langlochform verändert, und
- wobei ein Querschnitt des Kanals (200) im Formänderungsabschnitt (220) quer zur gemeinsamen Längsachse (202) steht.

2. Messzelle (100) nach Anspruch 1,
- wobei die Längsachse (202) eine Symmetrieachse des Kanals (200) bildet.

3. Messzelle (100) nach einem der vorhergehenden Ansprüche,
- wobei der Kanal (200) im Eingangsabschnitt (210) einen runden Querschnitt hat.

4. Messzelle (100) nach Anspruch 3,
- wobei der Kanal (200) im Eingangsabschnitt (210) einen Durchmesser von 3 mm bis 5 mm, oder einen Durchmesser von 4 mm, hat.

5. Messzelle (100) nach einem der vorhergehenden Ansprüche,
- wobei im Diffusorabschnitt (230) eine Tiefe (t) des Kanals (200) konstant bleibt, und
- sich eine Breite (b) des Kanals (200) aufweitet,
- wobei die Tiefe (t) eine Ausdehnung des Kanals (200) senkrecht zu den Sichtfenstern (120, 130) und/oder zwischen den Sichtfenstern (120, 130) angibt und die Breite (b) eine Ausdehnung des Kanals (200) quer zur Tiefe (t) und quer zur Längsachse (202) angibt.

6. Messzelle (100) nach Anspruch 5,
- wobei sich die Breite (b) mit einem Winkel zwischen 50° und 56°, oder 53°, aufweitet.

7. Messzelle (100) nach einem der vorhergehenden Ansprüche,
- wobei der Kanal (200) ferner einen gegenüberliegend zum Diffusorabschnitt (230) an den Messabschnitt (240) angrenzenden Verkleinerungsabschnitt (250) und einen gegenüberliegend zum Messabschnitt (240) an den Verkleinerungsabschnitt (250) angrenzenden Auslassabschnitt (270) aufweist,
- wobei ein Querschnitt des Kanals (200) im Auslassabschnitt (270) kleiner ist als im Messabschnitt (240) und sich im Verkleinerungsabschnitt (250) vom Messabschnitt (240) zum Auslassabschnitt (270) verkleinert,
- wobei der Auslassabschnitt (270) eine Auslassöffnung (207) zum Ausleiten des Fluidstroms (50) aus dem Kanal (200) aufweist, und
- wobei ein Querschnitt des Kanals (200) im Verkleinerungsabschnitt (250) und im Auslassabschnitt (270) jeweils quer zur gemeinsamen Längsachse (202) steht.

8. Messzelle (100) nach Anspruch 7,
- wobei der Kanal (200) zwischen Verkleinerungsabschnitt (250) und Auslassabschnitt (270) einen weiteren Formänderungsabschnitt (260) aufweist, in welchem sich ein Querschnitt des Kanals (200) zum Verkleinerungsabschnitt (250) hin in eine Langlochform verändert, und
- wobei ein Querschnitt des Kanals (200) im weiteren Formänderungsabschnitt (260) quer zur gemeinsamen Längsachse (202) steht.

9. Messzelle (100) nach einem der Ansprüche 7 oder 8,
- wobei der Verkleinerungsabschnitt (250) spiegelverkehrt zum Diffusorabschnitt (230) ausgebildet ist,
und/oder
- wobei der weitere Formänderungsabschnitt (260) spiegelverkehrt zum Formänderungsabschnitt (220) ausgebildet ist,
und/oder
- wobei der Auslassabschnitt (270) spiegelverkehrt zum Eingangsabschnitt (210) ausgebildet ist.

10. Messzelle (100) nach einem der vorhergehenden Ansprüche,
- wobei die Langlochform am Übergang zwischen Formänderungsabschnitt (220) und Diffusorabschnitt (230) und/oder am Übergang zwischen Verkleinerungsabschnitt (250) und weiterem Formänderungsabschnitt (260) eine Breite (b) von 3,5 mm bis 4,5 mm, oder eine Breite (b) von 4 mm, hat, und/oder
- wobei die Langlochform am Übergang zwischen Formänderungsabschnitt (220) und Diffusorabschnitt (230) und/oder am Übergang zwischen Verkleinerungsabschnitt (250) und weiterem Formänderungsabschnitt (260) einen seitlichen Radius (r) von 0,8 mm bis 1,2 mm, oder einen seitlichen Radius (r) von 1 mm, hat.

11. Messzelle (100) nach einem der vorhergehenden Ansprüche,
- wobei der Messabschnitt (240) zwischen den Sichtfenstern (120, 130) eine Tiefe (t) von mehr als 2 mm oder mehr als 3 mm oder mehr als 3,5 mm aufweist, und/oder
- wobei der Messabschnitt (240) zwischen den Sichtfenstern (120, 130) eine Tiefe (t) von weniger als 3 mm oder weniger als 3,5 mm oder weniger als 4 mm aufweist,
und/oder
- wobei der Messabschnitt (240) zwischen den Sichtfenstern (120, 130) eine Tiefe (t) von 1,6 mm bis 2,4 mm, oder eine Tiefe (t) von 2 mm, aufweist,
und/oder
- wobei der Messabschnitt (240) eine Breite (b) von 12 mm bis 16 mm, oder eine Breite (b) von 14 mm, aufweist.

12. Messzelle (100) nach einem der vorhergehenden Ansprüche,
- wobei der Querschnitt des Kanals (200) im Messabschnitt (240) eine konstante Langlochform aufweist.

13. Messzelle (100) nach einem der vorhergehenden Ansprüche,
- welche aus Werkstoffen ausgebildet ist, welche in einem pH-Wert-Bereich zwischen 5 und 8 oder in einem pH-Wert-Bereich zwischen 1 und 8 chemisch inert sind.

14. Messvorrichtung (10), aufweisend
- eine Messzelle (100) nach einem der vorhergehenden Ansprüche, und
- eine Auswerteeinrichtung (40), welche dazu konfiguriert ist, mittels eines durch die Sichtfenster (120, 130) geleiteten Lichtstrahls (22) ein durch den Kanal (200) fließendes Fluid und/oder darin enthaltene Suspensionen und/oder Partikel (55) auszuwerten.

## Claims

1. A measuring cell (100) for investigating a fluid flow (50),
wherein the measuring cell (100) has the following:
- a main body (110),
- a channel (200), leading through the main body (110), for the fluid flow (50),
- wherein the channel (200) has at least one inlet portion (210), a measuring portion (240) and a diffuser portion (230) lying between the inlet portion (210) and the measuring portion (240),
- wherein the inlet portion (210) has an inlet opening (205) for introducing the fluid flow (50) into the channel (200),
- wherein a cross-sectional area of the channel (200) increases in size in the diffuser portion (230) toward the measuring portion (240),
- wherein in the main body (110) there are formed to the sides of the measuring portion (240) of the channel (200) at least a first viewing window (120) and a second viewing window (130), which at least partially overlap,
- wherein a cross section of the channel (200) in the inlet portion (210), in the diffuser portion (230) and in the measuring portion (240) is in each case transverse to a common longitudinal axis (202),
**characterized in that**
- the channel (200) has between the inlet portion (210) and the diffuser portion (230) a form-changing portion (220), in which a cross section of the channel (220) changes into a slotted form toward the diffuser portion (230), and
- wherein a cross section of the channel (200) in the form-changing portion (220) is transverse to the common longitudinal axis (202).

2. The measuring cell (100) as claimed in claim 1,
- wherein the longitudinal axis (202) forms an axis of symmetry of the channel (200).

3. The measuring cell (100) as claimed in one of the preceding claims,
- wherein the channel (200) has a round cross section in the inlet portion (210).

4. The measuring cell (100) as claimed in claim 3,
- wherein the channel (200) has in the inlet portion (210) a diameter of 3 mm to 5 mm, or a diameter of 4 mm.

5. The measuring cell (100) as claimed in one of the preceding claims,
- wherein in the diffuser portion (230) a depth (t) of the channel (200) remains constant and
- a width (b) of the channel (200) widens,
- wherein the depth (t) indicates an extent of the channel (200) perpendicular to the viewing windows (120, 130) and/or between the viewing windows (120, 130) and the width (b) indicates an extent of the channel (200) transverse to the depth (t) and transverse to the longitudinal axis (202).

6. The measuring cell (100) as claimed in claim 5,
- wherein the width (b) widens with an angle between 50° and 56°, or 53°.

7. The measuring cell (100) as claimed in one of the preceding claims,
- wherein the channel (200) also has a size-reducing portion (250) adjoining the measuring portion (240) opposite from the diffuser portion (230) and an outlet portion (270) adjoining the size-reducing portion (250) opposite from the measuring portion (240),
- wherein a cross section of the channel (200) in the outlet portion (270) is smaller than in the measuring portion (240) and becomes smaller from the measuring portion (240) to the outlet portion (270) in the size-reducing portion (250),
- wherein the outlet portion (270) has an outlet opening (207) for conducting the fluid flow (50) out of the channel (200), and
- wherein, in the size-reducing portion (250) and in the outlet portion (270), a cross section of the channel (200) is in each case transverse to the common longitudinal axis (202).

8. The measuring cell (100) as claimed in claim 7,
- wherein the channel (200) has between the size-reducing portion (250) and the outlet portion (270) a further form-changing portion (260), in which a cross section of the channel (200) changes toward the size-reducing portion (250), into a slotted form, and
- wherein, in the further form-changing portion (260), a cross section of the channel (200) is transverse to the common longitudinal axis (202).

9. The measuring cell (100) as claimed in either of claims 7 and 8,
- wherein the size-reducing portion (250) is formed mirror-invertedly in relation to the diffuser portion (230),
and/or
- wherein the further form-changing portion (260) is formed mirror-invertedly in relation to the form-changing portion (220),
and/or
- wherein the outlet portion (270) is formed mirror-invertedly in relation to the inlet portion (210).

10. The measuring cell (100) as claimed in one of the preceding claims,
- wherein the slotted form at the transition between the form-changing portion (220) and the diffuser portion (230) and/or at the transition between the size-reducing portion (250) and the further form-changing portion (260) has a width (b) of 3.5 mm to 4.5 mm, or a width (b) of 4 mm,
and/or
- wherein the slotted form at the transition between the form-changing portion (220) and the diffuser portion (230) and/or at the transition between the size-reducing portion (250) and the further form-changing portion (260) has a lateral radius (r) of 0.8 mm to 1.2 mm, or a lateral radius (r) of 1 mm.

11. The measuring cell (100) as claimed in one of the preceding claims,
- wherein the measuring portion (240) has between the viewing windows (120, 130) a depth (t) of more than 2 mm or more than 3 mm or more than 3.5 mm, and/or
- wherein the measuring portion (240) has between the viewing windows (120, 130) a depth (t) of less than 3 mm or less than 3.5 mm or less than 4 mm, and/or
- wherein the measuring portion (240) has between the viewing windows (120, 130) a depth (t) of 1.6 mm to 2.4 mm, or a depth (t) of 2 mm,
and/or
- wherein the measuring portion (240) has a width (b) of 12 mm to 16 mm, or a width (b) of 14 mm.

12. The measuring cell (100) as claimed in one of the preceding claims,
- wherein the cross section of the channel (200) has a constant slotted form in the measuring portion (240).

13. The measuring cell (100) as claimed in one of the preceding claims,
- which is formed from materials that are chemically inert in a pH range between 5 and 8 or in a pH range between 1 and 8.

14. A measuring device (10), having
- a measuring cell (100) as claimed in one of the preceding claims, and
- an evaluation device (40), which is configured to evaluate a fluid flowing through the channel (200) and/or suspensions and/or particles (55) contained therein by means of a light beam (22) passed through the viewing windows (120, 130).

## Revendications

1. Cellule de mesure (100) permettant d'analyser un flux de fluide (50), la cellule de mesure (100) présentant :
- un corps de base (110),
- un canal (200) passant par le corps de base (110) pour le flux de fluide (50),
- dans laquelle le canal (200) présente au moins une partie d'entrée (210), une partie de mesure (240) et une partie de diffuseur (230) située entre la partie d'entrée (210) et la partie de mesure (240),
- dans laquelle la partie d'entrée (210) présente une ouverture d'admission (205) pour introduire le flux de fluide (50) dans le canal (200),
- dans laquelle une superficie de la section du canal (200) augmente dans la partie de diffuseur (230) en direction de la partie de mesure (240),
- dans laquelle au moins un premier hublot (120) et un deuxième hublot (130) qui se chevauchent au moins partiellement sont réalisés dans le corps de base (110) latéralement par rapport à la partie de mesure (240) du canal (200),
- dans laquelle une section transversale du canal (200) dans la partie d'entrée (210), dans la partie de diffuseur (230) et dans la partie de mesure (240) est respectivement transversale à un axe longitudinal commun (202),
**caractérisée en ce que** le canal (200) présente entre la partie d'entrée (210) et la partie de diffuseur (230) une partie de modification de forme (220) dans laquelle une section transversale du canal (200) se modifie en une forme de trou oblong en direction de la partie de diffuseur (230), et
- dans laquelle une section transversale du canal (200) est dans la partie de modification de forme (220) transversale à l'axe longitudinal commun (202).

2. Cellule de mesure (100) selon la revendication 1,
- dans laquelle l'axe longitudinal (202) forme un axe de symétrie du canal (200).

3. Cellule de mesure (100) selon l'une quelconque des revendications précédentes,
- dans laquelle le canal (200) présente une section transversale circulaire dans la partie d'entrée (210) .

4. Cellule de mesure (100) selon la revendication 3,
- dans laquelle le canal (200) présente dans la partie d'entrée (210) un diamètre de 3 mm à 5 mm, ou un diamètre de 4 mm.

5. Cellule de mesure (100) selon l'une quelconque des revendications précédentes,
- dans laquelle, dans la partie de diffuseur (230), une profondeur (t) du canal (200) reste constante, et
- une largeur (b) du canal (200) s'élargit,
- dans laquelle la profondeur (t) indique une étendue du canal (200) perpendiculaire aux hublots (120, 130) et/ou entre les hublots (120, 130), et la largeur (b) indique une étendue du canal (200) transversale à la profondeur (t) et transversale à l'axe longitudinal (202).

6. Cellule de mesure (100) selon la revendication 5,
- dans laquelle la largeur (b) s'élargit à un angle entre 50° et 56°, ou de 53°.

7. Cellule de mesure (100) selon l'une quelconque des revendications précédentes,
- dans laquelle le canal (200) présente en outre une partie de réduction (250) adjacente à la partie de mesure (240) à l'opposé de la partie de diffuseur (230), et une partie de sortie (270) adjacente à la partie de réduction (250) à l'opposé de la partie de mesure (240),
- dans laquelle une section transversale du canal (200) dans la partie de sortie (270) est plus petite que dans la partie de mesure (240) et se réduit dans la partie de réduction (250) de la partie de mesure (240) à la partie de sortie (270),
- dans laquelle la partie de sortie (270) présente une ouverture de sortie (207) pour évacuer le flux de fluide (50) du canal (200), et
- dans laquelle une section transversale du canal (200) est respectivement transversale à l'axe longitudinal commun (202) dans la partie de réduction (250) et dans la partie de sortie (270) .

8. Cellule de mesure (100) selon la revendication 7,
- dans laquelle le canal (200) présente entre la partie de réduction (250) et la partie de sortie (270) une autre partie de modification de forme (260) dans laquelle une section transversale du canal (200) se modifie en une forme de trou oblong en direction de la partie de réduction (250), et
- dans laquelle une section transversale du canal (200) est transversale à l'axe longitudinal commun (202) dans l'autre partie de modification de forme (260) .

9. Cellule de mesure (100) selon l'une quelconque des revendications 7 ou 8,
- dans laquelle la partie de réduction (250) est réalisée en miroir par rapport à la partie de diffuseur (230), et/ou
- dans laquelle l'autre partie de modification de forme (260) est réalisée en miroir par rapport à la partie de modification de forme (220), et/ou
- dans laquelle la partie de sortie (270) est réalisée en miroir par rapport à la partie d'entrée (210) .

10. Cellule de mesure (100) selon l'une quelconque des revendications précédentes,
- dans laquelle la forme de trou oblong présente à la transition entre la partie de modification de forme (220) et la partie de diffuseur (230) et/ou à la transition entre la entre partie de réduction (250) et l'autre partie de modification de forme (260) une largeur (b) de 3,5 mm à 4,5 mm, ou une largeur (b) de 4 mm, et/ou
- dans laquelle la forme de trou oblong présente à la transition entre la partie de modification de forme (220) et la partie de diffuseur (230) et/ou à la transition entre la partie de réduction (250) et l'autre partie de modification de forme (260) un rayon latéral (r) de 0,8 mm à 1,2 mm, ou un rayon latéral (r) de 1 mm.

11. Cellule de mesure (100) selon l'une quelconque des revendications précédentes,
- dans laquelle la partie de mesure (240) présente entre les hublots (120, 130) une profondeur (t) de plus 2 mm ou de plus de 3 mm ou de plus de 3,5 mm, et/ou
- dans laquelle la partie de mesure (240) présente entre les hublots (120, 130) une profondeur (t) de moins de 3 mm ou de moins de 3,5 mm ou de moins de 4 mm, et/ou
- dans laquelle la partie de mesure (240) présente entre les hublots (120, 130) une profondeur (t) de 1,6 mm à 2,4 mm, ou une profondeur (t) de 2 mm, et/ou
- dans laquelle la partie de mesure (240) présente une largeur (b) de 12 mm à 16 mm, ou une largeur (b) de 14 mm.

12. Cellule de mesure (100) selon l'une quelconque des revendications précédentes,
- dans laquelle la section transversale du canal (200) présente dans la partie de mesure (240) une forme de trou oblong constante.

13. Cellule de mesure (100) selon l'une quelconque des revendications précédentes,
- qui est réalisée à partir de matériaux qui sont chimiquement inertes dans une plage de pH entre 5 et 8 ou dans une plage de pH entre 1 et 8.

14. Dispositif de mesure (10), présentant
- une cellule de mesure (100) selon l'une quelconque des revendications précédentes, et
- un dispositif d'évaluation (40) qui est configuré pour évaluer au moyen d'un faisceau lumineux (22) guidé à travers les hublots (120, 130) un fluide s'écoulant à travers le canal (200) et/ou des suspensions et/ou particules (55) contenues dans celui-ci .
